# FASCICULE DE BREVET EUROPEEN

(11) **EP 3 716 118 B1**
(45) Date de publication et mention de la délivrance du brevet: **04.10.2023**
(21) Numéro de dépôt: 20164606.4
(22) Date de dépôt: 20.03.2020
(51) Int. Cl.: G06F 21/60, G06F 21/74, G06F 21/85, H04W 4/80, H04W 12/45

(54) **SYSTÈME ÉLECTRONIQUE**
ELEKTRONISCHES SYSTEM
ELECTRONIC SYSTEM

(30) Priorité: 25.03.2019 FR 1903065
(43) Date de publication de la demande: 30.09.2020
(73) Titulaire: PROTON WORLD INTERNATIONAL N.V., 1831 Diegem (BE)
(72) Inventeur: VAN NIEUWENHUYZE, Olivier, 1970 WEZEMBEEK-OPPEM (BE)
(74) Mandataire: Cabinet Beaumont

(56) Documents cités:
- US-A1- 2014 227 972
- US-A1- 2015 089 586
- US-A1- 2018 139 596
- ANWAR WAQAR ET AL: "Redesigning secure element access control for NFC enabled android smartphones using mobile trusted computing", INTERNATIONAL CONFERENCE ON INFORMATION SOCIETY (I-SOCIETY 2013), INFONOMICS SOCIETY, 24 juin 2013 (2013-06-24), pages 27-34, XP032507521,
- "TEE Protection Profile V1.0", , 1 August 2013 (2013-08-01), XP055117952, Retrieved from the Internet: URL:http://globalplatform.org/ [retrieved on 2014-05-14]

## Description

### Domaine technique

La présente description concerne de façon générale les appareils électroniques. La présente description s'applique de façon plus particulière à un composant électronique adapté à mettre en oeuvre plusieurs, au moins deux, systèmes d'exploitation différents.

### Technique antérieure

Les appareils électroniques complexes, tels que les téléphones portables, les tablettes électroniques, les ordinateurs, etc, intègrent, au fil du temps, de plus en plus de fonctionnalités et permettent la mise en place de services numériques et/ou digitaux afin de s'intégrer au mieux à la vie quotidienne. A titre d'exemple, certains téléphones portables, et plus particulièrement des téléphones intelligents (smartphones), intègrent des services digitaux tels qu'un service de paiement bancaire, ou encore un service d'utilisation de titres de transport en commun, de billets de spectacle, une authentification de l'utilisateur auprès d'un système à distance (bancaire, administration publique, etc.). Pour mettre en oeuvre ces fonctionnalités, ces appareils peuvent intégrer des composants électroniques spécifiques à ces fonctionnalités, comme par exemple des composants sécurisés qui permettent de conserver/stocker des informations d'identification, de référence et d'authentification, généralement désignées par "credentials", et des ressources (assets) du fournisseur du service digital, des capteurs de mouvement, un module de communication en champ proche (Near Field Communication, NFC), etc.

Une difficulté découlant de l'ajout de nouvelles fonctionnalités, est que cela peut obliger certains composants électroniques à mettre en oeuvre plusieurs, au moins deux, systèmes d'exploitation. De plus, des difficultés peuvent résulter de la cohabitation de plusieurs systèmes d'exploitation avec différents composants/périphériques qui lui sont connectés. Les demandes de brevet US 2018/139596 A1 et US 2015/089586 A1 font partie de l'art antérieur jugé pertinent.

### Résumé de l'invention

Il serait souhaitable de pouvoir améliorer, au moins en partie, certains aspects des appareils électroniques complexes, connus, tels que les téléphones portables, et plus particulièrement de pouvoir améliorer, au moins en partie, certains aspects de la cohabitation de plusieurs systèmes d'exploitation sur un même composant électronique.

Il existe un besoin pour un composant électronique adapté à la cohabitation de plusieurs systèmes d'exploitation et de leurs applications.

Il existe un besoin pour un appareil électronique comprenant un module de communication en champ proche (Near Field Communication, NFC), adapté à la cohabitation de plusieurs systèmes d'exploitation. L'invention est définie par la revendication indépendante 1 portant sur un appareil.

Un mode de réalisation pallie tout ou partie des inconvénients des appareils électroniques connus comprenant plusieurs systèmes d'exploitation et un module de communication en champ proche.

L'invention prévoit un appareil électronique comprenant au moins un élément sécurisé adapté à mettre en oeuvre au moins deux systèmes d'exploitation, et au moins un module de communication en champ proche relié audit élément sécurisé par au moins deux bus.

Selon l'invention, le module de communication en champ proche est adapté à aiguiller des données vers l'un ou l'autre des bus, l'élément sécurisé comportant une interface adaptée à associer chaque système d'exploitation à un des bus.

Selon un mode de réalisation, l'interface utilise une table de routage pour faire le lien entre un système d'exploitation et un bus.

Selon un mode de réalisation, l'interface utilise une information interne pour construire et effectuer l'aiguillage entre les systèmes d'exploitation et les bus.

Selon un mode de réalisation, le nombre de bus de communication est égal au nombre de systèmes d'exploitation.

Selon l'invention, un premier bus est adapté à échanger des données avec l'élément sécurisé lorsque ce dernier met en oeuvre un premier système d'exploitation, et un deuxième bus est adapté à échanger des données avec l'élément sécurisé lorsque ce dernier met en oeuvre un deuxième système d'exploitation.

Selon un mode de réalisation, le bus entre l'élément sécurisé et le module de communication en champ proche est un bus dont le type et le protocole associé sont choisis parmi le groupe : type unifilaire, type MIPI DSI, type I2C, type I3C, type SPI.

Selon un mode de réalisation, l'appareil est un téléphone portable.

Selon un mode de réalisation, un des systèmes d'exploitation est le système d'exploitation d'une carte SIM.

Selon un mode de réalisation, un des systèmes d'exploitation est le système d'exploitation d'une carte de paiement.

Selon un mode de réalisation, un des systèmes d'exploitation est le système d'exploitation d'une carte de transport en commun.

Selon un mode de réalisation, une application numérique est fournie par le système d'exploitation de la carte de transport en commun en utilisant un bus unifilaire pour établir une communication entre le module de communication en champ proche et l'élément de sécurité.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique, des circuits électroniques d'un appareil électronique ;
la figure 2 représente, de façon schématique et sous forme de blocs, un module de communication NFC et un élément sécurisé d'un mode de réalisation d'un appareil électronique ;
la figure 3 représente, de façon schématique et sous forme de blocs, un module de communication NFC et un élément sécurisé d'un autre mode de réalisation d'un appareil électronique ; Le mode de réalisation de la figure 3 n'est pas couvert par le texte des revendications mais est considéré utile pour la compréhension de l'invention;
la figure 4 représente, de façon schématique et sous forme de blocs, un module de communication NFC et un élément sécurisé d'un autre mode de réalisation d'un appareil électronique ; Le mode de réalisation de la figure 4 n'est pas couvert par le texte des revendications mais est considéré utile pour la compréhension de l'invention;
la figure 5 représente, de façon schématique et sous forme de blocs, un module de communication NFC et un élément sécurisé d'un autre mode de réalisation d'un appareil électronique ;
la figure 6 représente, de façon schématique et sous forme de blocs, un module de communication NFC et un élément sécurisé d'un autre mode de réalisation d'un appareil électronique. Le mode de réalisation de la figure 6 n'est pas couvert par le texte des revendications mais est considéré utile pour la compréhension de l'invention;

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les modes de réalisation décrits par la suite sont adaptés à la technologie de communication de champ proche (Near Field Communication, NFC) standard. Cette technologie ne sera pas décrite par la suite.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

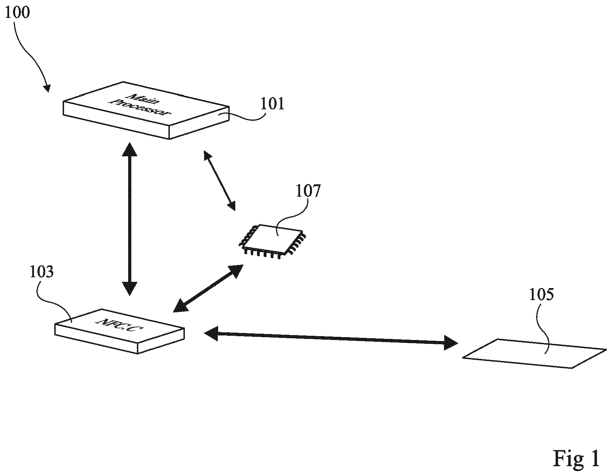

La figure 1 représente, de façon très schématique, certains des circuits électroniques d'un appareil électronique 100. L'appareil 100 est par exemple un téléphone portable, par exemple de type téléphone intelligent (smartphone), une tablette tactile ou tablette numérique, etc.

Selon un mode de réalisation, l'appareil 100 comprend un composant électronique (107) adapté à mettre en oeuvre plusieurs systèmes d'exploitation, par exemple au moins deux. L'appareil 100 est compatible avec la technologie de communication en champ proche (Near Field Communication, NFC). Ainsi l'appareil 100 comprend, entre autres, au moins un processeur 101, au moins un module de communication en champ proche, contrôleur NFC, ou module NFC, 103, au moins une antenne 105, et au moins un élément sécurisé 107.

Le processeur 101 est, par exemple, considéré comme le processeur principal de l'appareil 100. Le processeur 101 est adapté à mettre en oeuvre des commandes, transmises, par exemple, par l'élément sécurisé 107 ou par le module NFC 103. Le processeur 101 est en outre adapté à mettre en oeuvre d'autres commandes et fonctionnalités d'autres composants de l'appareil 100.

Le module NFC 103 est adapté à transmettre et à recevoir des données par l'intermédiaire de l'antenne 105. Le module NFC 103 est, en outre, adapté à transmettre et recevoir des données et/ou des commandes de la part du processeur 101 et de l'élément sécurisé 107.

L'antenne 105 est adaptée à la technologie de communication en champ proche.

L'élément sécurisé 107 est adapté à recevoir et à transmettre des données au module NFC 103 et au processeur 101. L'élément sécurisé 107 permet de mettre en oeuvre des fonctionnalités sécurisées de l'appareil 100. L'élément sécurisé 107 est, par exemple, un élément sécurisé embarqué (eSE - Embedded Secure Element) ou intégré (iSE - Integrated/Imbedded Secure Element).

Selon un mode de réalisation, l'élément sécurisé 107 est adapté à mettre en oeuvre plusieurs, au moins deux, systèmes d'exploitation. Chaque système d'exploitation n'a pas connaissance des autres systèmes d'exploitation qui cohabitent avec lui-même sur le même composant électronique. Il ne peut pas communiquer, interagir ou accéder aux données des autres systèmes d'exploitation. Autrement dit, lorsqu'il est "activé", un système d'exploitation pense être le seul à pouvoir accéder aux composants de l'appareil 100. A titre d'exemple dans le cas où l'appareil 100 est un téléphone portable, le système d'exploitation principal ou premier système d'exploitation est celui d'une carte SIM (Subscriber Identity Module) dans lequel les informations d'identification du propriétaire du téléphone sont stockées ainsi que d'autres informations permettant de connecter/enregistrer l'appareil à un réseau mobile. Ce premier système d'exploitation peut, le cas échéant, contenir d'autres services tels qu'un service de carte de transport en commun. Dans ce cas, une application numérique peut être fournie par le système d'exploitation de la carte de transport en commun en utilisant un bus, par exemple un bus unifilaire, pour établir la communication entre le module NFC 103 et l'élément de sécurité 107. A titre d'exemple, dans ce cas, un deuxième système d'exploitation peut être un système d'exploitation d'une carte de paiement.

Ainsi avec plusieurs systèmes d'exploitation, l'appareil 100 peut, en fonction des situations d'utilisation, proposer les fonctionnalités liées soit au premier soit au deuxième système d'exploitation. En d'autres termes, l'appareil peut, par exemple, servir de carte de paiement ou de carte de transport en commun.

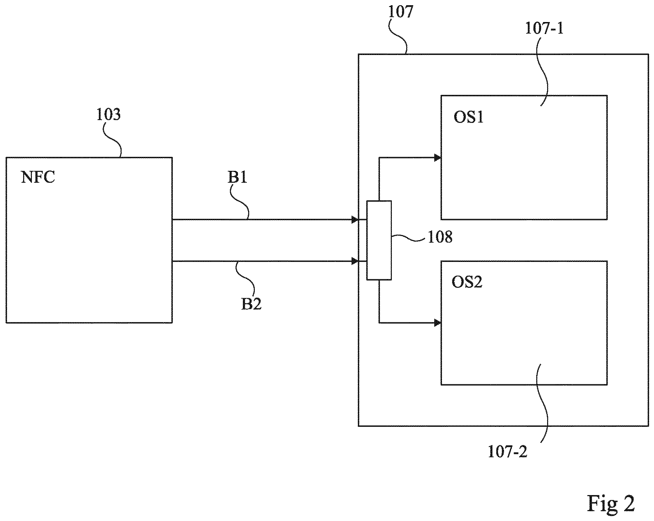

Différents moyens de liaison entre l'élément sécurisé 107 et le module NFC 103 seront détaillés en relation avec les figures 2 à 4.

La figure 2 représente, de façon schématique et sous forme de blocs, un mode de réalisation de moyens de liaison entre le module NFC (NFC) 103 et l'élément sécurisé 107 du mode de réalisation de l'appareil 100 décrit en relation avec la figure 1. L'élément 107 est adapté à mettre en oeuvre deux systèmes d'exploitation, chacun symbolisé par un bloc portant la référence (OS1) 107-1, (OS2) 107-2. L'élément sécurisé 107 comprend et implémente une interface, ou couche d'interface, ou couche d'abstraction, 108 du bus de communication.

Dans ce mode de réalisation, le module NFC 103 est reliée à l'élément sécurisé 107 par l'intermédiaire de deux bus B1 et B2. Chaque bus B1, B2 est adapté à transmettre et à recevoir des données et commandes relatives à un seul système d'exploitation ou à une application s'exécutant à partir de ce système d'application. Dans le cas de la figure 2, le module NFC (NFC) 103 est adapté à aiguiller les données vers le bus B1, B2 adéquat. A titre d'exemple, le module NFC 103 peut utiliser une partie des données ou des commandes pour savoir vers quel système d'exploitation la diriger. A titre d'exemple, les bus B1 et B2 sont des bus unifilaires exploitant un protocole de bus unifilaire, SWP - Single Wire Protocol, ou sont des bus multifilaires exploitant un protocole de bus multifilaire de type MIPI DSI (Mobile Industry Processor Interface Display Serial Interface), de type I2C (Inter-Integrated Circuit), de type I3C (une évolution du type I3C), ou de type SPI (Serial Peripheral Interface). En variante, les bus sont constitués de n'importe quel support de communication approprié entre le module de communication en champ proche et l'élément sécurisé.

La couche d'abstraction 108 permet par exemple au système d'exploitation 107-1 d'envoyer des commandes via le bus sans devoir se préoccuper s'il doit utiliser le bus B1 ou B2. Le système d'exploitation 107-1 voit uniquement (pour lui-même) l'existence d'un bus. La couche d'interface 108 permet donc d'établir la relation entre les couples système d'exploitation/bus 107-1/B1 et 107-2/B2, sans que chaque système d'exploitation 107-1, 107-2 ne sache que l'autre existe. Pour ce faire, un mode de réalisation consiste en la modélisation/création, par la couche 108, d'une table de routage ou de translation entre les couples. Les systèmes d'exploitation 107-1 et 107-2, lorsqu'ils communiquent via le bus B1 ou B2, parlent au bus de manière "générique". En d'autres termes, les deux systèmes d'exploitation 107-1 et 107-2 ne connaissent pas l'existence des deux bus B1 et B2. Pour chacun d'entre eux il n'existe qu'un seul bus. La couche 108 peut, par exemple, limiter le nombre de systèmes d'exploitation (ou le nombre de systèmes d'exploitation demandant l'accès au bus qu'elle gère) au nombre de bus de communication disponibles demandés par les systèmes d'exploitation, ce qui peut être utile dans le cas où le nombre de bus est inférieur au nombre de systèmes d'exploitation gérés par l'élément sécurisé. Selon un mode de réalisation, le module NFC 103 contient une information représentative du nombre de systèmes d'exploitation que met en oeuvre l'élément sécurisé 107.

Selon une variante de réalisation, l'appareil 100 pourrait comprendre un élément sécurisé adapté à mettre en oeuvre plus de deux systèmes d'exploitation pouvant recevoir et/ou transmettre des données du module NFC. Dans ce cas, le module NFC pourrait être relié à l'élément sécurisé par autant de bus que de systèmes d'exploitation mis en oeuvre par l'élément sécurisé.

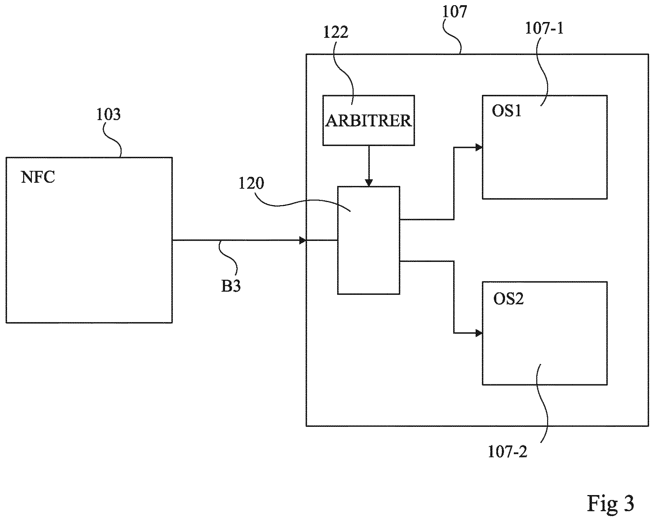

La figure 3 représente, de façon schématique et sous forme de blocs, un autre mode de réalisation d'un moyen de liaison entre le module NFC 103 et l'élément sécurisé 107 du mode de réalisation de l'appareil 100 décrit en relation avec la figure 1. Comme en figure 2, l'élément 107 est adapté à mettre en oeuvre deux systèmes d'exploitation, chacun symbolisé par un bloc portant la référence (OS1) 107-1, (OS2) 107-2.

Dans ce mode de réalisation, le module NFC 103 est relié à l'élément sécurisé 107 par l'intermédiaire d'un unique bus B3 qui transmet des données et commandes destinées indifféremment aux deux systèmes d'exploitation. L'élément sécurisé 107 comprend une couche d'aiguillage/abstraction 120, ou circuit d'aiguillage, permettant d'aiguiller les données et commandes vers le système d'exploitation concerné. Le circuit d'aiguillage 120 permet, en outre, d'effectuer des modifications, ou des adaptations, sur les données et commandes qu'il transmet aux deux systèmes d'exploitation, façon que chaque système d'exploitation n'ait pas conscience de l'existence des autres systèmes d'exploitation. Ainsi, chaque système d'exploitation croit être le seul à mettre en oeuvre l'élément sécurisé 107. La couche d'aiguillage/abstraction est pilotée par une entité externe d'arbitrage (ARBITRER) 122, ou arbitre, qui est contrôlée, par exemple, par le processeur principal 101. Cet arbitre interagit avec l'élément sécurisé 107, et plus particulièrement avec la couche d'aiguillage/abstraction 120, pour lui signifier quel système d'exploitation sera en charge de traiter les données qui arrivent. La couche d'aiguillage/abstraction a aussi pour rôle que, lorsqu'un système d'exploitation est activé pour la première fois, ce système d'exploitation va vouloir configurer le contrôleur NFC avec ses propres paramètres (comme défini dans la norme ETSI TS 102 622). Lorsqu'un autre système d'exploitation sera activé pour la première fois, il devra également configurer le module NFC avec ses propres paramètres. Sans le circuit d'aiguillage, cette dernière opération effacerait la configuration du premier système d'exploitation. La couche d'aiguillage doit donc "mémoriser" la configuration faite par chaque système d'exploitation et la recharger dans le contrôleur NFC à chaque changement d'activation d'un système d'exploitation différent. Le circuit d'aiguillage peut prendre plusieurs formes et peut varier selon l'application, mais la configuration mémorisée reste utilisable et stockée en interne par le circuit d'aiguillage, qui peut alors la compléter par de nouvelles informations de configuration fournies par chaque système d'exploitation pour le contrôleur NFC. Dans le mode de réalisation illustré par la figure 3, le circuit d'aiguillage est une machine d'état comprenant une entrée, reliée au bus B3, et deux sorties, chacune en communication avec un système d'exploitation de l'élément sécurisé 107-1, 107-2.

Selon une variante de réalisation, l'appareil 100 pourrait comprendre un élément sécurisé adapté à mettre en oeuvre plus de deux systèmes d'exploitation, dans ce cas, le circuit d'aiguillage comprend autant de sorties que de systèmes d'exploitation pouvant recevoir et/ou transmettre des données du module NFC, et mis en oeuvre par l'élément sécurisé 107.

Le circuit d'aiguillage 120 utilise, par exemple, une information contenue dans les données ou les commandes pour déterminer quel système d'exploitation en est le destinataire. Selon un autre exemple, le circuit de routage pourrait être commandé par l'élément sécurisé 107 ou par le module NFC 103 pour aiguiller les données vers le système d'exploitation 107-1, 107-2 concerné. Le circuit d'aiguillage sert, en particulier, à affecter des canaux (pipe) à des ports du routeur NFC. Le circuit d'aiguillage créé par la couche d'aiguillage/translation 120 est par exemple mis en oeuvre par une table de correspondance, par exemple stockée dans une mémoire non volatile. Selon une variante, le circuit d'aiguillage 120 peut être mise en oeuvre par une machine d'état.

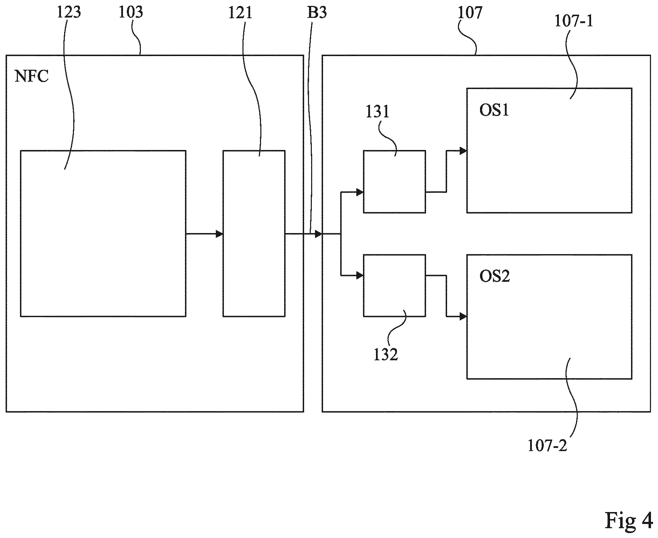

La figure 4 représente, de façon schématique et sous forme de blocs, un autre mode de réalisation d'un moyen de liaison entre le module NFC 103 et l'élément sécurisé 107 du mode de réalisation de l'appareil 100 décrit en relation avec la figure 1. Comme en figures 2 et 3, l'élément 107 est adapté à mettre en oeuvre deux systèmes d'exploitation, chacun symbolisé par un bloc portant la référence (OS1) 107-1, (OS2) 107-2.

Dans ce mode de réalisation, le module NFC 103 est relié à l'élément sécurisé 107 par l'intermédiaire d'un unique bus B3 qui transmet indifféremment des données et commandes destinées aux deux systèmes d'exploitation. Les données et commandes sont aiguillées par un circuit d'aiguillage 121 compris dans le module NFC 103 vers le système d'exploitation concerné. Dans le mode de réalisation illustré par la figure 4, le circuit d'aiguillage 121 comprend une entrée, recevant des données d'un circuit de réception 123, et une sortie, reliée au bus B3. Selon une variante de réalisation, l'appareil 100 peut comprendre un élément sécurisé adapté à mettre en oeuvre plus de deux systèmes d'exploitation, dans ce cas, le circuit d'aiguillage 121 comprend autant de sorties que de systèmes d'exploitation pouvant recevoir et/ou transmettre des données du module NFC, et mis en oeuvre par l'élément sécurisé. Selon un mode de réalisation, le circuit d'aiguillage 121 est une table de routage. Le module NFC 103 comprend généralement une table de routage, mais la table de routage 121 est une table de routage additionnelle. Si le système supporte un nombre indéterminé de systèmes d'exploitation, le module NFC en est informé (par exemple lors de l'établissement de la communication avec le module 107 ou le processeur 101) afin de cibler un système d'exploitation précis 107-1 ou 107-2 et non l'élément sécurisé 107 de manière générale.

Le circuit d'aiguillage 121 utilise, par exemple, une information contenue dans les données ou les commandes pour déterminer quel système d'exploitation en est le destinataire. Le circuit d'aiguillage 121 est par exemple mis en oeuvre par une table de correspondance, par exemple stockée dans une mémoire non volatile, interprété par les circuits de conversion 131 et 132.

Les circuits de conversion 131 et 132 sont des circuits de conversion de données adaptés à convertir les données et commandes reçues afin qu'elles deviennent compréhensibles et exécutables par le système d'exploitation concerné, et que ces circuits de conversion enlèvent des données ou commande de routage qui auraient été ajoutés par le contrôleur NFC. De même, si un message doit être envoyé d'un système d'exploitation précis (107-1 ou 107-2), les circuits de conversion 131 et 132 doivent rajouter les informations nécessaires au routage. A titre d'exemple, les circuits de conversion 131 et 132 sont compris partiellement, ou en totalité, dans l'élément sécurisé 107. Les circuits de conversion 131, 132 permettent, de ce fait, de laisser croire à chaque système d'exploitation 107-1, 107-2 qu'il est seul à pouvoir mettre en oeuvre l'élément sécurisé 107. En effet, chaque système d'exploitation ne reçoit des données et des commandes qui lui sont directement destinées et qu'il est apte à interpréter et/ou à mettre en oeuvre.

Selon une variante de réalisation, le bus B3 pouvant être composé de plusieurs conducteurs, un premier groupe de conducteurs pourrait être délégué à la transmission de données et de commandes ne concernant qu'un système d'exploitation 107-1, et un deuxième groupe de données pourrait être délégué à la transmission de données et de commandes vers l'autre système d'exploitation.

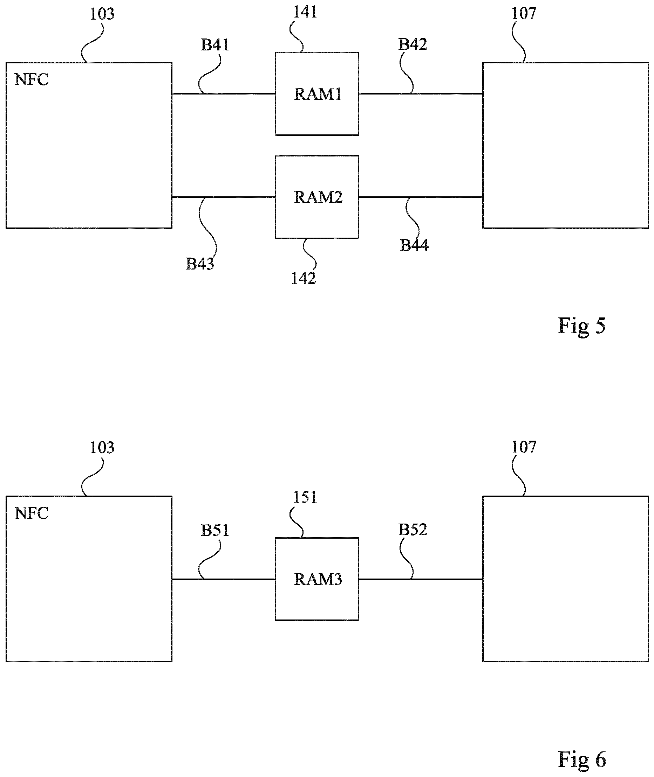

La figure 5 représente, de façon très schématique et sous forme de blocs, un autre mode de réalisation de moyens de liaison entre le module NFC 103 et l'élément sécurisé 107 du mode de réalisation de l'appareil 100 décrit en relation avec la figure 1. L'élément 107 est adapté à mettre en oeuvre deux systèmes d'exploitation notés OS1 et OS2, et est identique à l'élément 107 décrit en relation avec la figure 2. Ainsi, l'élément 107 comprend la couche d'abstraction 108.

Le mode de réalisation décrit ici est une variante de réalisation du mode de réalisation décrit en relation avec la figure 2, dans lequel les bus B1 et B2 sont chacun remplacé par une mémoire. Plus particulièrement, chaque bus B1, B2 est remplacé par une mémoire volatile 141 (RAM1), 142 (RAM2). Chaque mémoire 141, respectivement 142, est reliée au module NFC 103 par un bus B41, respectivement B43, et est reliée à l'élément 107 par un bus B42, respectivement B44.

Dans ce mode de réalisation, le module NFC (NFC) 103 est adapté à aiguiller les données vers la mémoire 141, 142 adéquate.

Dans ce mode de réalisation, les données envoyées par le module NFC 103 à l'élément 107, et destinées au système d'exploitation OS1 sont, dans un premier temps, transmises, par le bus B41, puis écrites dans la mémoire 141 par le module NFC 103. Dans un deuxième temps, l'élément 107 récupère lesdites données dans la mémoire 141, par l'intermédiaire du bus B42. Les données arrivent ensuite au niveau de la couche d'abstraction 108 comme décrit en relation avec la figure 2.

De même, les données envoyées par le module NFC 103 à l'élément 107, et destinées au système d'exploitation OS2 sont, dans un premier temps, transmises, par le bus B43, puis écrites dans la mémoire 142 par le module NFC 103. Dans un deuxième temps, l'élément 107 récupère lesdites données dans la mémoire 142, par l'intermédiaire du bus B44. Les données arrivent ensuite au niveau de la couche d'abstraction 108 comme décrit en relation avec la figure 2.

Selon une variante de réalisation, les mémoires volatiles 141 et 142 sont deux zones mémoires d'une même mémoire volatile.

La figure 6 représente, de façon très schématique et sous forme de blocs, un autre mode de réalisation de moyens de liaison entre le module NFC 103 et l'élément sécurisé 107 du mode de réalisation de l'appareil 100 décrit en relation avec la figure 1.

Le mode de réalisation décrit ici est une variante de réalisation des modes de réalisation décrits en relation avec les figures 3 et 4, dans lesquels le bus B3 est remplacé par une mémoire volatile. Plus particulièrement, le bus B3 est remplacé par une mémoire volatile 151 (RAM3), reliée au module NFC 103 par un bus B51 et à l'élément 107 par un bus B52.

Dans ces variantes, les données envoyées par le module NFC 103 à l'élément 107, sont, dans un premier temps, transmises, par le bus B51, puis écrites dans la mémoire 151 par le module NFC 103. Dans un deuxième temps, l'élément 107 récupère lesdites données dans la mémoire 151, par l'intermédiaire du bus B52.

Le module NFC et l'élément 107 peuvent être identiques au module NFC et à l'élément 107 décrits en relation avec la figure 3 ou être identiques au module NFC et à l'élément 107 décrits en relation avec la figure 4.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art.

Enfin, la mise en oeuvre pratique des modes de réalisation et variantes décrits est à la portée de l'homme du métier à partir des indications fonctionnelles données ci-dessus.

## Revendications

1. Appareil électronique comprenant un élément sécurisé (107) adapté à mettre en oeuvre au moins deux systèmes d'exploitation (107-1, 107-2), les deux systèmes d'exploitation (107-1, 107-2) ne pouvant pas interagir ensemble, et au moins un module de communication en champ proche (103) relié à l'élément sécurisé (107) par au moins un premier et un deuxième bus (B1, B2),
dans lequel le premier bus (B1) est adapté à échanger des données avec l'élément sécurisé (107) lorsque ce dernier met en oeuvre un premier système d'exploitation (107-1), et le deuxième bus (B2) est adapté à échanger des données avec l'élément sécurisé (107) lorsque ce dernier met en oeuvre un deuxième système d'exploitation (107-2),
dans lequel le module de communication en champ proche (103) est adapté à aiguiller des données vers l'un ou l'autre des bus (B1, B2), l'élément sécurisé comportant une interface (108) adaptée à associer chaque système d'exploitation (107-1, 107-2) à un des bus (B1, B2).

2. Appareil selon la revendication 1, dans lequel l'interface (108) utilise une table de routage pour faire le lien entre un système d'exploitation (107-1, 107-2) et un bus (B1, B2) .

3. Appareil selon la revendication 1 ou 2, dans lequel l'interface (108) utilise une information interne pour construire et effectuer l'aiguillage entre les systèmes d'exploitation (107-1, 107-2) et les bus (B1, B2).

4. Appareil selon l'une quelconque des revendications 1 à3, dans lequel le nombre de bus de communication est égal au nombre de systèmes d'exploitation.

5. Appareil selon l'une quelconque des revendications 1 à 4, dans lequel chaque bus entre l'élément sécurisé (107) et le module de communication en champ proche (103) est un bus dont le type et le protocole associé sont choisis parmi le groupe : type unifilaire (SWP), de type MIPI DSI, de type I2C, de type I3C, de type SPI.

6. Appareil selon l'une quelconque des revendications 1 à 5, étant un téléphone portable.

7. Appareil selon l'une quelconque des revendications 1 à 6, dans lequel un des systèmes d'exploitation (107-1, 107-2) est le système d'exploitation d'une carte SIM.

8. Appareil selon l'une quelconque des revendications 1 à 7, dans lequel un des systèmes d'exploitation (107-1, 107-2) est le système d'exploitation d'une carte de paiement.

9. Appareil selon l'une quelconque des revendications 1 à 8, dans lequel un des systèmes d'exploitation (107-1, 107-2) est le système d'exploitation d'une carte de transport en commun.

10. Appareil selon la revendication 9, dans lequel une application numérique est fournie par le système d'exploitation de la carte de transport en commun en utilisant un bus unifilaire pour établir une communication entre le module de communication en champ proche (103) et l'élément de sécurité (107).

## Patentansprüche

1. Elektronische Vorrichtung, aufweisend mindestens ein sicheres Element (107), das geeignet ist, mindestens zwei Betriebssysteme (107-1, 107-2) zu implementieren, wobei die beiden Betriebssysteme (107-1, 107-2) nicht miteinander interagieren können, und mindestens ein Nahfeldkommunikationsmodul (103), das mit dem sicheren Element (107) durch mindestens einen ersten und einen zweiten Bus (B1, B2) gekoppelt ist,
wobei der erste Bus (B1) zum Austausch von Daten mit dem sicheren Element (107) geeignet ist, wenn dieses ein erstes Betriebssystem (107-1) implementiert, und der zweite Bus (B2) zum Austausch von Daten mit dem sicheren Element (107) geeignet ist, wenn dieses ein zweites Betriebssystem (107-2) implementiert,
wobei das Nahfeldkommunikationsmodul (103) geeignet ist, Daten zu einem der beiden Busse (B1, B2) zu leiten, wobei das sichere Element eine Schnittstelle (108) enthält, die geeignet ist, jedes Betriebssystem (107-1, 107-2) mit einem der Busse (B1, B2) zu verbinden.

2. Vorrichtung nach Anspruch 1, wobei die Schnittstelle (108) eine Routingtabelle verwendet, um ein Betriebssystem (107-1, 107-2) mit einem Bus (B1, B2) zu verbinden.

3. Vorrichtung nach Anspruch 1 oder 2, wobei die Schnittstelle (108) interne Informationen verwendet, um das Routing zwischen den Betriebssystemen (107-1, 107-2) und den Bussen (B1, B2) zu erstellen und durchzuführen.

4. Vorrichtung nach einem der Ansprüche 1 bis 3, wobei die Anzahl der Kommunikationsbusse gleich der Anzahl der Betriebssysteme ist.

5. Vorrichtung nach einem der Ansprüche 1 bis 4, wobei jeder Bus zwischen dem Sicherheitselement (107) und dem Nahfeld-Kommunikationsmodul (103) ein Bus ist, dessen Typ und zugehöriges Protokoll ausgewählt sind aus der Gruppe: Single-Wire-Typ (SWP), MIPI-DSI-Typ, I2C-Typ, I3C-Typ, SPI-Typ.

6. Vorrichtung nach einem der Ansprüche 1 bis 5, das ein Mobiltelefon ist.

7. Vorrichtung nach einem der Ansprüche 1 bis 6, wobei eines der Betriebssysteme (107-1, 107-2) das Betriebssystem einer SIM-Karte ist.

8. Vorrichtung nach einem der Ansprüche 1 bis 7, wobei eines der Betriebssysteme (107-1, 107-2) das Betriebssystem einer Zahlungskarte ist.

9. Vorrichtung nach einem der Ansprüche 1 bis 8, wobei eines der Betriebssysteme (107-1, 107-2) das Betriebssystem einer Karte für öffentliche Verkehrsmittel ist.

10. Vorrichtung nach Anspruch 9, wobei eine digitale Anwendung durch das Betriebssystem der öffentlichen Verkehrskarte bereitgestellt wird, unter Verwendung eines Single-Wire-Bus zum Herstellen einer Kommunikation zwischen der Nahfeldkommunikationseinheit (103) und dem sicheren Element (107).

## Claims

1. Electronic device comprising at least one secure element (107) suitable of implementing at least two operating systems (107-1, 107-2), the two operating systems (107-1, 107-2) couldn't interact with each other, and at least one near field communication module (103) coupled with the secure element (107) by at least a first and a second bus (B1, B2),
wherein the first bus (B1) is suitable for exchanging data with the secure element (107) when the latter implements a first operating system (107-1), and the second bus (B2) is suitable for exchanging data with the secure element (107) when the latter implements a second operating system (107-2),
wherein the near field communication module (103) is suitable for routing data towards either bus (B1, B2), the secure element including an interface (108) suitable for associating each operating system (107-1, 107-2) with one of the buses (B1, B2).

2. Apparatus according to claim 1, wherein the interface (108) uses a routing table to link an operating system (107-1, 107-2) with a bus (B1, B2).

3. Apparatus according to claim 1 or 2, wherein the interface (108) uses internal information to construct and perform the routing between the operating systems (107-1, 107-2) and the buses (B1, B2).

4. Apparatus according to any of claims 1 to 3, wherein the number of communication buses is equal to the number of operating systems.

5. Apparatus according to any of claims 1 to 4, wherein each bus between the secure element (107) and the near field communication module (103) is a bus the type and associated protocol of which are selected from the group: single-wire type (SWP), MIPI DSI type, I2C type, I3C type, SPI type.

6. Apparatus according to any of claims 1 to 5, being a cell phone.

7. Apparatus according to any of claims 1 to 6, wherein one of the operating systems (107-1, 107-2) is the operating system of a SIM card.

8. Apparatus according to any of claims 1 to 7, wherein one of the operating systems (107-1, 107-2) is the operating system of a payment card.

9. Apparatus according to any of claims 1 to 8, wherein one of the operating systems (107-1, 107-2) is the operating system of a public transport card.

10. Apparatus according to claim 9, wherein a digital application is supplied by the operating system of the public transport card by using a single-wire bus to establish a communication between the near field communication unit (103) and the secure element (107).
